# EUROPEAN PATENT APPLICATION

(11) **EP 4 682 433 A1**
(43) Date of publication of application: **21.01.2026**
(21) Application number: 25184409.8
(22) Date of filing: 23.06.2025
(51) Int. Cl.: F24F 7/003, F24F 7/007, F24F 8/108, F24F 11/00, F24F 11/58, F24F 11/64

(54) **INDOOR AIR CLEANING NETWORK MECHANISM SYSTEM**

(30) Priority: 16.07.2024 TW 113126632
(71) Applicant: Microjet Technology Co., Ltd., Hsinchu (TW)
(72) Inventor: Mou, Hao-Jan, Hsinchu (TW); Wu, Chin-Chuan, Hsinchu (TW); Huang, Chi-Feng, Hsinchu (TW)
(74) Representative: Uexküll & Stolberg

(57) **Abstract**

An indoor air cleaning system with networking mechanism is provided for detecting and purifying air pollution in indoor field (A) to a level close to zero. Through arranging plural gas detectors (1), at least one gas molecule controlling hardware apparatus (2) and a networking cloud computing server (3), and communicating the gas detectors (1) arranged in indoor field (A) and outdoor field (B) and the gas detector (1) installed inside each gas molecule controlling hardware apparatus (2) with the cloud to form an intelligent linking system, the gas guider (21) in the gas molecule controlling hardware apparatus (2) can be enabled in real time for monitoring the air quality of the indoor field (A) anytime and anywhere. Each gas molecule controlling hardware apparatus (2) includes at least one gas guider (21), at least one filter element (22) and at least one driving controller (23) for detecting, filtering and purifying air pollution through networking control, thereby achieving a cleanness of cleanroom class.

## Description

### FIELD OF THE INVENTION

The present disclosure relates to an indoor air cleaning system with networking mechanism, and more particularly to an indoor air cleaning system with networking mechanism for detecting and cleaning air pollution to a level close to zero in an indoor field.

### BACKGROUND OF THE INVENTION

Suspended particles are solid particles or droplets contained in the air. Due to their extremely fine size, the suspended particles may enter the lungs of human body through the nasal hairs in the nasal cavity easily, causing inflammation in the lungs, asthma or cardiovascular disease. If other pollutant compounds are attached to the suspended particles, it will further increase the harm to the respiratory system. In recent years, the problem of air pollution is getting worse. In particular, the concentration of particle matters (e.g., PM2.5) is often too high. Therefore, the monitoring to the concentration of the gas suspended particles is taken more and more seriously. However, the gas flows unstably due to variable wind direction and gas volume, and the general gas-quality monitoring station is located in a fixed place, so that it is impossible for people to check the concentration of suspended particles in current environment.

Furthermore, in recent years, modern people are placing increasing importance on the quality of the air in their surroundings. For example, carbon monoxide, carbon dioxide, volatile organic compounds (VOC), PM2.5, nitric oxide, sulfur monoxide and even the suspended particles contained in the air are exposed in the environment to affect the human health, and even endanger the life seriously. Therefore, the quality of environmental air has attracted the attention of various countries. At present, how to detect the air quality and avoid the harm is a crucial issue that urgently needs to be solved.

In order to confirm the quality of the air, it is feasible to use a gas sensor to detect the air in the surrounding environment. If the detection information can be provided in real time to warn people in the environment, it is helpful of avoiding the harm and facilitates people to escape the hazard immediately, preventing the hazardous gas exposed in the environment from affecting the human health and causing the harm. Therefore, it is considered a valuable application to use a gas sensor to detect the air in the surrounding environment.

In addition, it is not easy to control the indoor air quality. Besides the outdoor air quality, indoor air-conditioning conditions and pollution sources are the major factors affecting the indoor air quality. It is necessary to intelligently and quickly detect indoor air pollution sources in various indoor fields, effectively remove the indoor air pollution to form a clean and safe breathing gas state, and monitor the indoor air quality in real time anytime, anywhere. Certainly, if the concentration of the suspended particles in the indoor field is strictly controlled according to the "clean room" standard, it allows avoiding the introduction, generation and retention of suspended particles, and the temperature and humidity in the indoor field can be controlled within the required range, and thus, the indoor field can meet the clean room requirements for safe breathing.

Therefore, it is a main subject in the present disclosure to develop an indoor air cleaning system with networking mechanism which provides a solution of detecting the indoor air quality and solving the problem of air pollution, so that the indoor field can meet the cleanroom requirements, and the impact and injury for human health caused by the gas hazards in the environment can be avoided.

### SUMMARY OF THE INVENTION

An object of the present disclosure is to provide an indoor air cleaning system with networking mechanism for detecting and purifying air pollution in an indoor field to a level close to zero. Through arranging a plurality of gas detectors, at least one gas molecule controlling hardware apparatus and a networking cloud computing server, and communicating the gas detectors arranged in the indoor field and the outdoor field and the gas detectors installed inside each gas molecule controlling hardware apparatus with the cloud to form an intelligent linking system, the gas molecule controlling hardware apparatus can be enabled for monitoring the air quality of the indoor field anytime and anywhere. Each gas molecule controlling hardware apparatus includes at least one gas guider, at least one filter element and at least one driving controller for detecting, filtering and purifying air pollution through networking control. Through the indoor air cleaning system with networking mechanism as described above, the temperature of the indoor field can be obtained, the level of carbon dioxide difference between the indoor field and the outdoor field can be reduced to close to zero, and PM2.5 and other air pollutants can be purified, thereby achieving the purification procedure for reaching cleanroom class with a level of air pollution close to zero through real time air pollution detection. At the same time, the air pollution in the indoor field is detected and intelligently compared with the air quality of surrounding environment, and the gas volume of the gas guider is adjusted in real time based on the air quality, so that the operation of the gas molecule controlling hardware apparatus can be effectively adjusted in an energy saving manner, and the gas guiding noise also can be reduced to a level close to zero, thereby achieving energy saving in an environmentally friendly manner, and also achieving an optimal cost effectiveness for executing the purification procedure for reaching cleanroom class with a level of air pollution close to zero.

In accordance with an aspect of the present disclosure, an indoor air cleaning system with networking mechanism is provided. The indoor air cleaning system with networking mechanism includes a plurality of gas detectors arranged in an indoor field and an outdoor field for detecting air pollution information and temperature and humidity information of gas; a networking cloud computing server receiving the air pollution information and the temperature and humidity information of gas of the indoor field and the outdoor field, storing thereof to form a big data database of air pollution data, and intelligently issuing a control instruction; and at least one gas molecule controlling hardware apparatus disposed in the indoor field and comprising at least one of the plurality of gas detectors disposed therein, wherein the at least one gas molecule controlling hardware apparatus comprises at least one gas exchange device, at least one purifier, at least one fan filter unit, at least one exhaust device, at least one smoke exhaust system, at least one dehumidifier, at least one vacuum cleaner and at least one air conditioning device, and each of the at least one gas molecule controlling hardware apparatus comprises at least one gas guider, at least one filter element and at least one driving controller, wherein a gas detector disposed in the at least one gas molecule controlling hardware apparatus is electrically connected to the at least one driving controller, and the gas detector receives the control instruction via Internet of Things (IoT) communication and provides the control instruction to the driving controller for controlling the at least one gas guider to execute a purification procedure for reaching cleanroom class with a level of air pollution close to zero through exchanging a gas in the indoor field, adjusting a temperature and a humidity of the indoor field, and guiding an air pollution to pass through the at least one filter element multiple times, and wherein the gas detector outputs the air pollution information and the temperature and humidity information of gas of the indoor field; wherein the networking cloud computing server receives the air pollution information and the temperature and humidity information of gas detected by the plurality of gas detectors, performs an intelligence computing for comparison based on the big data database of air pollution data, and intelligently selects and issues the control instruction to the at least one gas guider of the at least one gas molecule controlling hardware apparatus for enabling the operation of the at least one gas guider, thereby executing the purification procedure for reaching cleanroom class with a level of air pollution close to zero through guiding the air pollution in the indoor field to pass through the at least one filter element, and achieving a cleanness of cleanroom class through detecting and purifying the air pollution in real time.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic view illustrating an indoor air cleaning system with networking mechanism implemented in an indoor field according to an embodiment of the present disclosure;
FIG. 1B is a schematic view illustrating a gas exchange device of a gas molecule controlling hardware apparatus according to an embodiment of the present disclosure;
FIG. 1C is a schematic view illustrating a fan filter unit (FFU) of the gas molecule controlling hardware apparatus according to an embodiment of the present disclosure;
FIG. 1D is a schematic view illustrating a purifier of the gas molecule controlling hardware apparatus according to an embodiment of the present disclosure;
FIG. 1E is a schematic cross-sectional view illustrating the purifier of the gas molecule controlling hardware apparatus shown in FIG. 1A and FIG. 1B;
FIG. 1F is a schematic cross-sectional view illustrating a dehumidifier of the gas molecule controlling hardware apparatus shown in FIG. 1A and FIG. 1B;
FIG. 1G is a schematic cross-sectional view illustrating a vacuum cleaner of the gas molecule controlling hardware apparatus shown in FIG. 1A and FIG. 1B;
FIG. 2 is a schematic view illustrating the combination of filter elements of the gas molecule controlling hardware apparatus according to an embodiment of the present disclosure;
FIG. 3A is a schematic perspective view illustrating a gas detector according to an embodiment of the present disclosure;
FIG. 3B is a schematic perspective view illustrating the gas detector according to the embodiment of the present disclosure from another view angle;
FIG. 3C is a schematic perspective view illustrating a gas detection module installed inside the gas detector according to the embodiment of the present disclosure;
FIG. 4A is a schematic perspective view (1) illustrating a gas detection main part according to the embodiment of the present disclosure;
FIG. 4B is a schematic perspective view (2) illustrating the gas detection main part according to the embodiment of the present disclosure;
FIG. 4C is an exploded view illustrating the gas detection main part according to the embodiment of the present disclosure;
FIG. 5A is a schematic perspective view (1) illustrating a base according to the embodiment of the present disclosure;
FIG. 5B is a schematic perspective view (2) illustrating the base according to the embodiment of the present disclosure;
FIG. 6 is a schematic view (3) illustrating the base according to the embodiment of the present disclosure;
FIG. 7A is a schematic exploded view illustrating a piezoelectric actuator and the base according to the embodiment of the present disclosure;
FIG. 7B is a schematic perspective view illustrating the combination of the piezoelectric actuator and the base according to the embodiment of the present disclosure;
FIG. 8A is a schematic exploded view (1) illustrating the piezoelectric actuator according to the embodiment of the present disclosure;
FIG. 8B is a schematic exploded view (2) illustrating the piezoelectric actuator according to the embodiment of the present disclosure;
FIG. 9A is a schematic cross-sectional view (1) illustrating an action of the piezoelectric actuator according to the embodiment of the present disclosure;
FIG. 9B is a schematic cross-sectional view (2) illustrating an action of the piezoelectric actuator according to the embodiment of the present disclosure;
FIG. 9C is a schematic cross-sectional view (3) illustrating an action of the piezoelectric actuator according to the embodiment of the present disclosure;
FIG. 10A is a schematic cross-sectional view (1) illustrating the gas detection main part according to the embodiment of the present disclosure;
FIG. 10B is a schematic cross-sectional view (2) illustrating the gas detection main part according to the embodiment of the present disclosure;
FIG. 10C is a schematic cross-sectional view (3) illustrating the gas detection main part according to the embodiment of the present disclosure;
FIG. 11 is a block diagram illustrating the communication of the gas detector according to the embodiment of the present disclosure.
FIG. 12 is a block diagram illustrating the architecture of a networking cloud computing server according to the embodiment of the present disclosure; and
FIG. 13 is a comparison table showing required equivalents of clean air delivery rate (CADR) per cubic meter for ZAPClean room 1~12.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

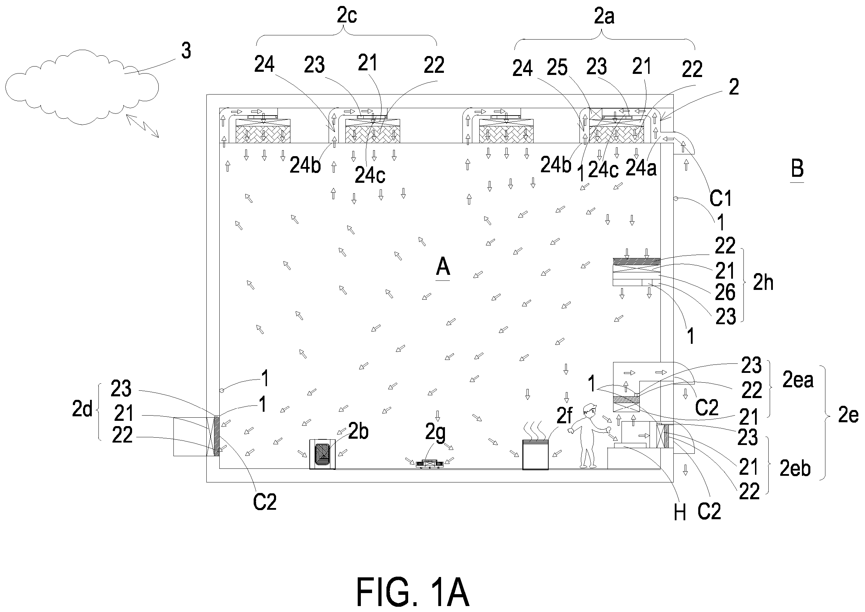

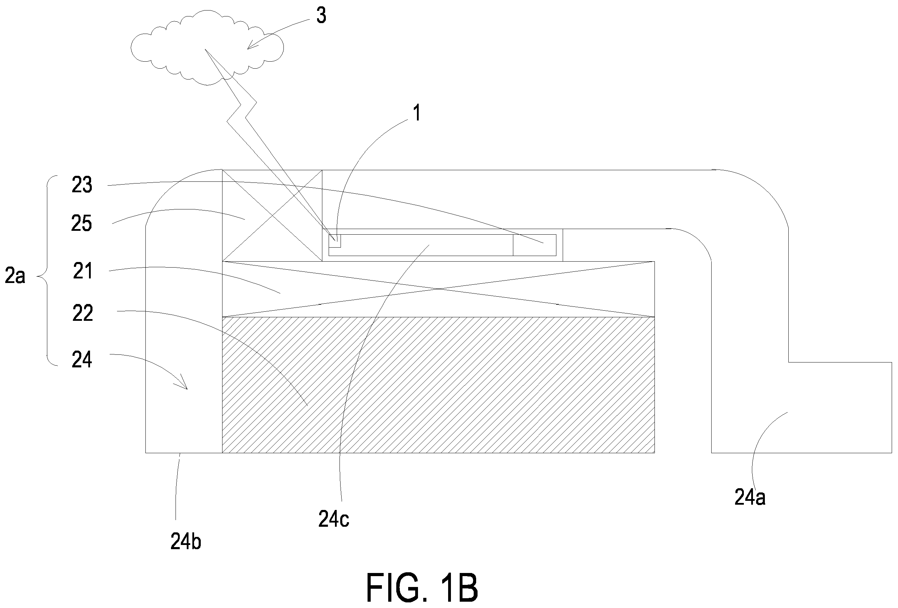

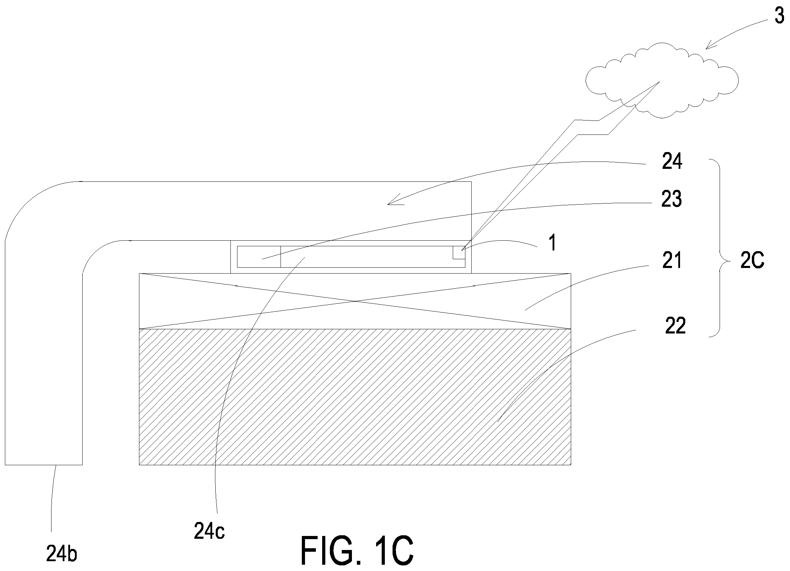

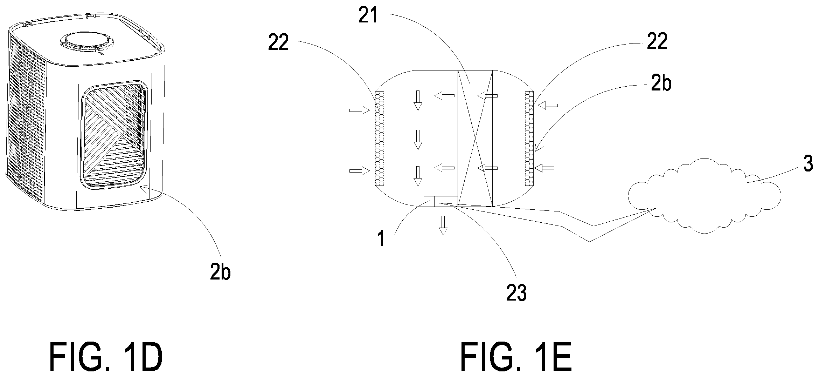

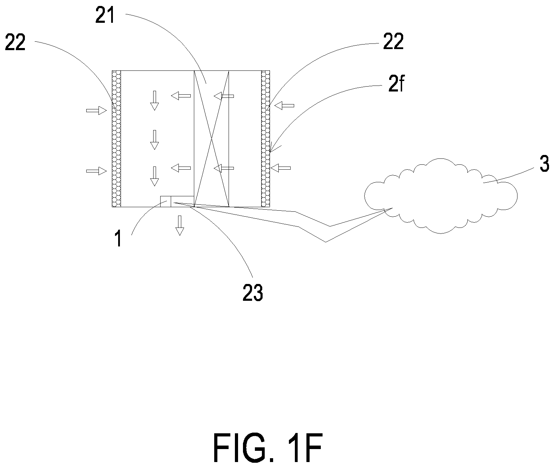

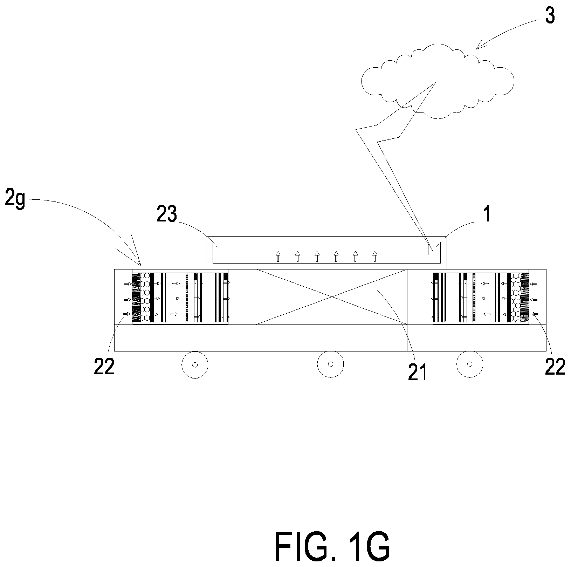

Please refer to FIG. 1. The present disclosure is related to an indoor air cleaning system with networking mechanism including a plurality of gas detectors 1, at least one gas molecule controlling hardware apparatus 2 and a networking cloud computing server 3.

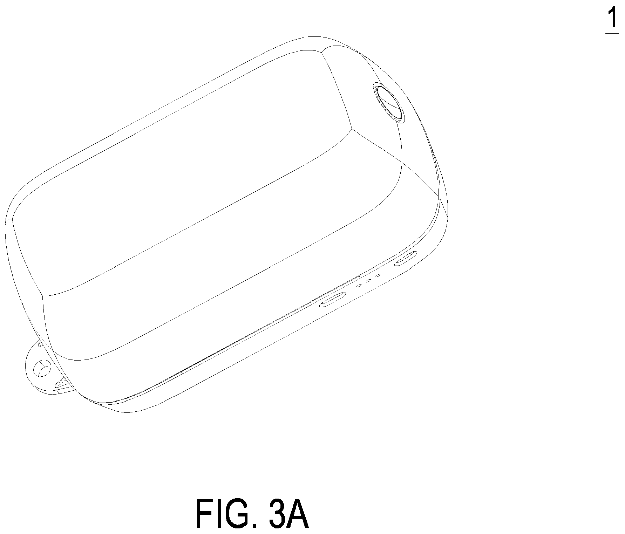

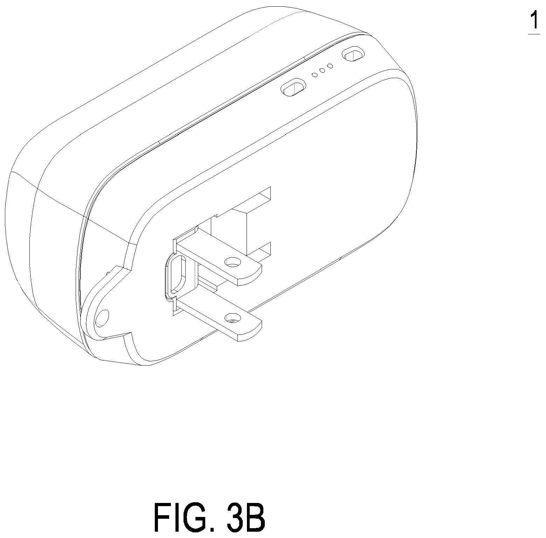

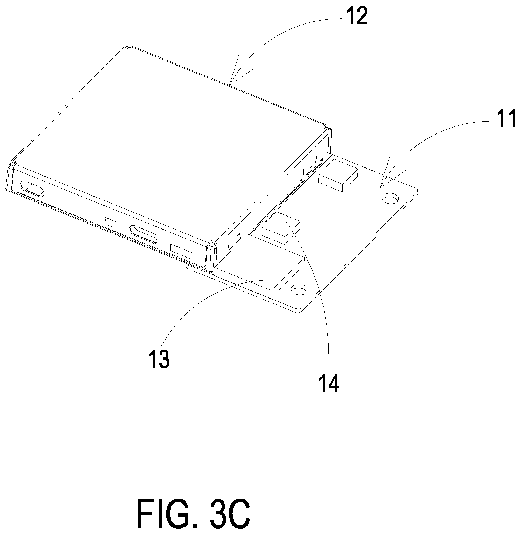

The plurality of gas detectors 1 are arranged in an indoor field A and an outdoor field B for detecting air pollution information, and temperature and humidity information of gas. The gas detectors 1 output the air pollution information and the temperature and humidity information of gas via Internet of Things (IoT) communication. Notably, the gas detector 1 may include a gas detection module installed therein. Please refer to FIG. 3A and FIG. 3B, the gas detector 1 can be configured with an external power terminal, and the external power terminal can be directly inserted into the power interface in the indoor field A for enabling the detection of air pollution. Alternatively, as shown in FIG. 3C, the gas detection module without external power supply terminals is directly disposed on and electrically connected to the gas molecule controlling hardware apparatus 2, and the gas detection module receives a control instruction for controlling the power supply of the gas molecule controlling hardware apparatus 2 and thus enabling thereof. Notably, the indoor field A includes at least one gas introducing opening C1 and at least one gas discharging opening C2.

The IoT communication refers to the collective network which connects various devices and the mutual communication technology between devices and between device and the cloud. The IoT communication can provide wired communication for the networking cloud computing server 3 to communicate in a wired manner. The IoT communication also can provide wireless communication for the networking cloud computing server 3 to communicate wirelessly. Preferably but not exclusively, the wireless communication is one selected from the group consisting of a Wi-Fi communication, a Bluetooth communication, a radio frequency identification communication and a near field communication.

Notably, in the embodiment, the air pollution includes at least one selected from the group consisting of particulate matter, carbon monoxide, carbon dioxide, ozone, sulfur dioxide, nitrogen dioxide, lead, total volatile organic compounds (TVOC), formaldehyde, bacteria, fungi, virus and a combination thereof.

The gas molecule controlling hardware apparatus 2 is disposed in the indoor field A and has at least one gas detector 1 installed therein. The gas molecule controlling hardware apparatus 2 includes at least one gas exchange device 2a, at least one purifier 2b, at least one fan filter unit (FFU) 2c, at least one exhaust device 2d, at least one smoke exhaust system 2e, at least one dehumidifier 2f, at least one vacuum cleaner 2g and at least one air conditioning device 2h. Each gas molecule controlling hardware apparatus 2 described above includes a gas guider 21, a filter element 22 and a driving controller 23. The gas detector 1 installed in the gas molecule controlling hardware apparatus 2 is electrically connected to the driving controller 23, receives a control instruction via IoT communication and provides the control instruction to the driving controller 23 for controlling the gas guider 21 to execute a purification procedure for reaching cleanroom class with a level of air pollution close to zero through exchanging the gas in the indoor field A and guiding the air pollution to pass through the filter element 22 multiple times. The gas detector 1 also outputs the air pollution information and the temperature and humidity information of gas of the indoor field A.

The networking cloud computing server 3 receives air pollution information and temperature and humidity information of gas of the indoor field A and of the outdoor field B via IoT communication, stores thereof to form a big data database of air pollution data, performs an intelligence computing for comparison based on the big data database of air pollution data, and intelligently selects and issues the control instruction to the gas guider 21 of the gas molecule controlling hardware apparatus 2 for enabling the operation thereof. That is, the air pollution in the indoor field A is detected and intelligently compared with the air quality of surrounding environment, and the gas volume of the gas guider 21 is adjusted in real time based on the air quality, so that the operation of the gas molecule controlling hardware apparatus 2 can be effectively adjusted for energy saving, and the gas guiding noise also can be reduced to a level close to zero, which saves energy in an environmentally friendly manner.

According to descriptions above, it is known that the networking cloud computing server 3 receives the air pollution information and the temperature and humidity information of gas of the indoor field and of the outdoor field detected by the plurality of gas detectors 1, performs the intelligence computing for comparison based on the big data database of air pollution data, and intelligently selects and issues the control instruction to the gas guider 1 of the gas molecule controlling hardware apparatus 2 for enabling the operation thereof, thereby executing the purification procedure for reaching cleanroom class with a level of air pollution close to zero through guiding the air pollution in the indoor field A to pass through the filter element 22, and thus achieving a cleanness of cleanroom class through real time air pollution detection and purification. Moreover, after a required equivalent of clean air delivery rate (CADR) of the indoor field A is intelligently (AI) computed and confirmed by the networking cloud computing server 3, the number and arrangement of the gas molecule controlling hardware apparatuses 2 and the optimal CADR of the gas guiders 21 can be decided based on the required equivalent, thereby achieving the purification procedure for reaching cleanroom class with a level of air pollution close to zero through real time air pollution detection and thus achieving the optimal cost effectiveness thereof.

Furthermore, as shown in FIG. 1A and FIG. 1B, the gas exchange device 2a includes a gas guiding channel 24. The gas guiding channel 24 includes a gas introducing port 24a corresponding to the gas introducing opening C1 of the indoor field A, a circulation returning port 24b communicated with the indoor field A, and a gas filtering channel 24c communicated with the indoor field A. A gas exchanger 25 is disposed near the circulation returning port 24b, and the gas filtering channel 24c has the gas guider 21 and the filter element 22 disposed therein. In that, the networking cloud computing server 3 intelligently computes to compare the air pollution information and the temperature and humidity information of gas of the indoor field A with those of the outdoor field B, and when the level of the air pollution information of the indoor field A is higher than that of the outdoor field B, the networking cloud computing server 3 issues the control instruction via IoT communication to the gas detector 1 inside the gas exchange device 2a for controlling the driving controller 23 to enable the gas guider 21 and the gas exchanger 25. Accordingly, the gas in the outdoor field B is introduced into the gas filtering channel 24c through the gas introducing opening C1, filtered through passing through the filter element 22, and enters the indoor field A, and at the same time, the gas in the indoor field A enters the gas filtering channel 24c again for circulation and filtration, thereby achieving temperature adjustment and gas exchange. Notably, the air pollution information of the indoor field A and the outdoor field B is a level of carbon dioxide (CO₂), and the gas exchange is to reach a level of carbon dioxide difference between the indoor field A and the outdoor field B close to zero. Notably, when the gas detector 1 near the gas exchange device 2a detects that the air pollution in the indoor field A exceeds a preset safety value of air pollution, the control instruction also can be issued thereby directly to the driving controller 23 to enable the gas guider 21 of the gas exchange device 2a for guiding the gas from the outdoor field B into the indoor field A for gas exchange. Notably, when the gas exchange device 2a is enabled to perform the gas exchange, a positive pressure higher than 0 Pa must be maintained in the indoor field A, so that the air pollution in the outdoor field B will not enter the indoor field A. Preferably but not exclusively, the gas exchange device 2a is a fresh air exchanging system, or the gas exchange device 2a is an energy recovery ventilation system, or the gas exchange device 2a is a heating, ventilation and air conditioning (HVAC) system, but not limited thereto.

As shown in FIG. 1A, FIG. 1D and FIG. 1E, the purifier 2b is disposed in the indoor field A in a plug-in manner, and the networking cloud computing server 3 issues the control instruction via IoT communication to the gas detector 1 inside the purifier 2b for controlling the driving controller 23 to enable the gas guider 21, so that the air pollution in the indoor field A is guided to pass through the filter element 22 for filtration and purification, and then, the purified air is introduced into the indoor field A again. Therefore, the air pollution in the indoor field A is guided to pass through the filter element 22 multiple times, thereby executing the purification procedure for reaching cleanroom class with a level of air pollution close to zero.

As shown in FIG. 1A and FIG. 1C, the fan filter unit (FFU) 2c is disposed in the indoor field A in a build-in manner. The fan filter unit (FFU) 2c includes a gas guiding channel 24. The gas guiding channel 24 includes a circulation returning port 24b communicated with the indoor field A, and a gas filtering channel 24c communicated with the indoor field A, wherein the gas filtering channel 24c has the gas guider 21 and the filter element 22 disposed therein. In that, the networking cloud computing server 3 issues the control instruction via IoT communication to the gas detector 1 inside the fan filter unit (FFU) 2c for controlling the driving controller 23 to enable the gas guider 21, so that the air pollution in the indoor field A is guided to enter the gas filtering channel 24c through the circulation returning port 24b and pass through the filter element 22 for filtration and purification, and then, the purified air is introduced into the indoor field A again. Therefore, the air pollution in the indoor field A is guided to enter the gas guiding channel 24 multiple times for effectively inhibiting the gas backflow effect during circulation and filtration, thereby achieving the purification procedure for reaching cleanroom class with a level of air pollution close to zero.

As shown in FIG. 1A, the exhaust device 2d is disposed in the indoor field A in a build-in manner, and is corresponding to the gas discharging opening C2 for exhausting the gas to the outdoor field B. In that, the networking cloud computing server 3 issues the control instruction via IoT communication to the gas detector 1 inside the exhaust device 2d for controlling the driving controller 23 to enable the gas guider 21, so that the air pollution in the indoor field A is guided by the gas guider 21 to pass through the filter element 22 for filtration and purification and exhaust to the outdoor field B, thereby achieving the purification procedure for reaching cleanroom class with a level of air pollution close to zero.

As shown in FIG. 1A, when cooking foods in the kitchen of the indoor field A, severe air pollution might occur fast, and in order to avoid the air pollution from influencing human health, the gas molecule controlling hardware apparatus 2 can be a smoke exhaust system 2e disposed in the kitchen. The smoke exhaust system 2e includes a gas discharging channel 2ea disposed above the cooker H, corresponding to the gas discharging opening C2 and communicated with the outdoor field B, and the gas discharging channel 2ea has the gas guider 21, the filter element 22 and the driving controller 23 disposed therein. The smoke exhaust system 2e also includes a smoke discharging main part 2eb disposed in front of the cooker H, corresponding to the gas discharging opening C2 and communicated with the outdoor field B, and the smoke discharging main part 2eb has the gas guider 21, the filter element 22 and the driving controller 23 disposed therein. Each of the gas discharging channel 2ea and the smoke discharging main part 2eb has a gas detector 1 installed therein and electrically connected to the driving controller 23. In that, the networking cloud computing server 3 issues the control instruction via IoT communication to the gas detectors 1 respectively inside the gas discharging channel 2ea and the smoke discharging main part 2eb for controlling the driving controllers 23 to enable the gas guiders 21, so that the air pollution in kitchen of the indoor field A is guided to enter the gas discharging channel 2ea and the smoke discharging main part 2eb and pass through the filter elements 22 for filtration and purification, and then exhaust to the outdoor field B, thereby achieving the purification procedure for reaching cleanroom class with a level of air pollution close to zero.

As shown in FIG. 1A, the dehumidifier 2f is disposed in the indoor field A in a plug-in manner, and the networking cloud computing server 3 issues the control instruction via IoT communication to the gas detector 1 inside the dehumidifier 2f for controlling the driving controller 23 to enable the gas guider 21, so that the air pollution in the indoor field A is guided to pass through the filter element 22 for filtration and purification, thereby achieving the purification procedure for reaching cleanroom class with a level of air pollution close to zero, and adjusting the temperature and humidity of gas in the indoor field A. Notably, the dehumidifier 2f is set to have a safety value of temperature at 25°C±3°C, and a safety value of humidity at 50%±10%.

As shown in FIG. 1A and FIG. 1G, the vacuum cleaner 2g is disposed in the indoor field A in a plug-in manner, and the networking cloud computing server 3 issues the control instruction via IoT communication to the gas detector 1 inside the vacuum cleaner 2g for controlling the driving controller 23 to enable the gas guider 21, so that the air pollution in the indoor field A is guided to pass through the filter element 22 for filtration and purification, thereby achieving the purification procedure for reaching cleanroom class with a level of air pollution close to zero. Notably, the vacuum cleaner 2g is a mobile vacuum cleaner (such as the robotic vacuum cleaner).

As shown in FIG. 1A, the air conditioning device 2h is disposed in the indoor field A, and the air conditioning device 2h includes a heat exchanger 26. In that, the networking cloud computing server 3 issues the control instruction via IoT communication to the gas detector 1 inside the air conditioning device 2h for controlling the driving controller 23 to enable the gas guider 21, so that the gas in the indoor field A is guided to pass through the heat exchanger 26 for adjusting temperature and humidity of gas in the indoor field A. Also, the gas detector 1 outputs the temperature and humidity information of gas of the indoor field A. Notably, the air conditioning device 2h is set to adjust the temperature of the indoor field A at 25°C±3°C and the humidity of the indoor field A at 50%±10%.

The enablement of the gas guiders 2 in the gas molecule controlling hardware apparatuses 2 is controlled by the gas detectors 1 arranged in the indoor field A and the gas detectors 1 installed in the gas molecule controlling hardware apparatuses 2 through communicating with the networking cloud computing server 3. Each gas detector 1 is implemented to monitor the air quality of the indoor field A in real time, and at the same time, transmit the detected air pollution information of the indoor field A to the networking cloud computing server 3 for performing an intelligent comparison with the air quality of surrounding environment based on the big data database, so that the gas volumes of the gas guiders 21 of the gas molecule controlling hardware apparatuses 2 arranged in all positions can be adjusted based on the air quality, thereby effectively controlling the operations of the gas molecule controlling hardware apparatuses 2 in an energy saving manner.

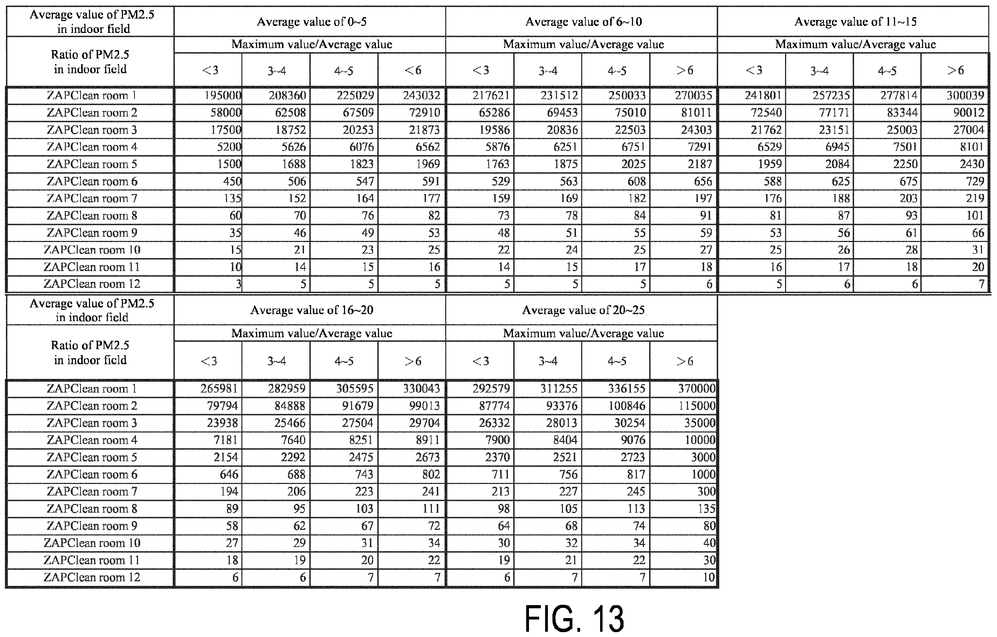

Please refer FIG. 13. The requirements of cleanroom classes of the indoor field A in the present disclosure are ZAPClean room 1~12. In that, after obtaining the required equivalent of clean air delivery rate (CADR) of the indoor field A through intelligent (AI) computing based on the big data database, the arranged number of the gas molecule controlling hardware apparatuses 2 and the optimal clean air delivery rate (CADR) of the gas guiders 21 can be decided thereby, so as to monitor the air quality of the indoor field A in real time, thereby executing the purification procedure for reaching cleanroom class with a level of air pollution close to zero in an optimal cost effective manner. Notably, the required equivalent of clean air delivery rate (CADR) refers to the amount of clean air delivery rate (CADR) of gas guider 21 required in the indoor field A of one region for purifying the air pollution in to a level close to zero.

Following is a preferred embodiment of the required equivalent of clean air delivery rate (CADR) in the indoor field A according to the present disclosure.

In the indoor air cleaning system with networking mechanism of the present disclosure, it only needs to input the region of the indoor field A, and the required equivalent of clean air delivery rate (CADR) for the indoor field A can be obtained. For example, after knowing that the indoor field A is located in Taipei, the area of the indoor field A is 9.917 square meters, and the cleanness requirement is ZAPClean room 9, the required equivalent of clean air delivery rate (CADR) can be obtained.

The indoor air cleaning system with networking mechanism of the present disclosure can perform the intelligent computing and analysis based on the big data database, e.g., the comparison table showing required equivalents of clean air delivery rate (CADR) per cubic meter for ZAPClean room 1~12 as shown in FIG. 13.

The required equivalents of clean air delivery rate (CADR) per cubic meter for ZAPClean room 1~12 in the present disclosure are as followed.

The required equivalent of clean air delivery rate (CADR) per cubic meter for ZAPClean room 1 is ranged from 195000 to 370000 m³/h. The required equivalent of clean air delivery rate (CADR) per cubic meter for ZAPClean room 2 is ranged from 58000 to 115000 m³/h. The required equivalent of clean air delivery rate (CADR) per cubic meter for ZAPClean room 3 is ranged from 17500 to 35000 m³/h. The required equivalent of clean air delivery rate (CADR) per cubic meter for ZAPClean room 4 is ranged from 5200 to 10000 m³/h. The required equivalent of clean air delivery rate (CADR) per cubic meter for ZAPClean room 5 is ranged from 1500 to 3000 m³/h. The required equivalent of clean air delivery rate (CADR) per cubic meter for ZAPClean room 6 is ranged from 450 to 1000 m³/h. The required equivalent of clean air delivery rate (CADR) per cubic meter for ZAPClean room 7 is ranged from 135 to 300 m³/h. The required equivalent of clean air delivery rate (CADR) per cubic meter for ZAPClean room 8 is ranged from 60 to 135 m³/h. The required equivalent of clean air delivery rate (CADR) per cubic meter for ZAPClean room 9 is ranged from 35 to 80 m³/h. The required equivalent of clean air delivery rate (CADR) per cubic meter for ZAPClean room 10 is ranged from 15 to 40 m³/h. The required equivalent of clean air delivery rate (CADR) per cubic meter for ZAPClean room 11 is ranged from 10 to 30 m³/h. The required equivalent of clean air delivery rate (CADR) per cubic meter for ZAPClean room 12 is ranged from 3 to 10 m³/h.

When inputting the location of the indoor field A as Taipei and the size of space thereof, the required equivalent of clean air delivery rate (CADR) for executing the purification procedure for reaching cleanroom class with a level of air pollution close to zero can be decided through the networking cloud computing server 3 performing the intelligent computing based on the big data database of air pollution data. After computing, it obtains that the maximum value of PM2.5 in Taipei among five years is 37, and the average value is 11.9. The average value 11.9 is within the range of average value of 10~15 in the comparison table, and the ratio of the maximum value 37 to the average value 11.9 is 3.1 which is within the range of 3~4 of maximum value/average value in the comparison table. As the cleanness requirement is ZAPClean room 9, it obtains that for indoor field in this region, the required equivalent of clean air delivery rate (CADR) per cubic meter for ZAPClean room 9 is 52.26 m³/h. Then, as the space of the indoor field is 268 m³, it obtains that the required equivalent of clean air delivery rate (CADR) for this indoor field is 15078 m³/h. Therefore, the required equivalent of clean air delivery rate (CADR) of the gas molecule controlling hardware apparatus 2 is set to be 15000 m³/h for executing the purification procedure for reaching cleanroom class with a level of air pollution close to zero. Accordingly, for the arrangement of the gas molecule controlling hardware apparatuses 2 in the present disclosure, it can be selected to cooperate the gas guiders 21 of three gas exchange devices 2a which are set to have an optimal clean air delivery rate (CADR) of 1000 m³/h with the gas guiders 21 of fifty fan filter units (FFU) 2c which are set to have an optimal clean air delivery rate (CADR) of 800 m³/h, thereby achieving the required equivalent of clean air delivery rate (CADR) of 15000 m³/h for the gas molecule controlling hardware apparatuses 2, but not limited thereto. The required equivalent of clean air delivery rate (CADR) for the indoor field A is decided by the arranged number of the gas molecule controlling hardware apparatuses 2 and the optimal clean air delivery rate (CADR) of the gas guiders 21 of the gas molecule controlling hardware apparatuses 2, so as to execute the purification procedure for reaching cleanroom class with a level of air pollution close to zero through real time air pollution detection, thereby achieving the cost effectiveness for reaching the cleanness of cleanroom class and optimizing the purification of air pollution to cleanroom class with a level close to zero.

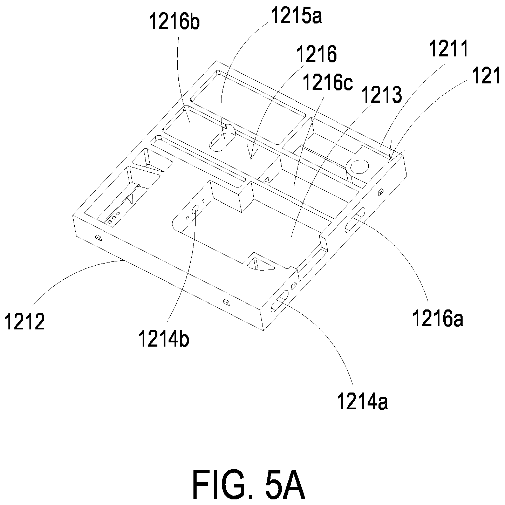

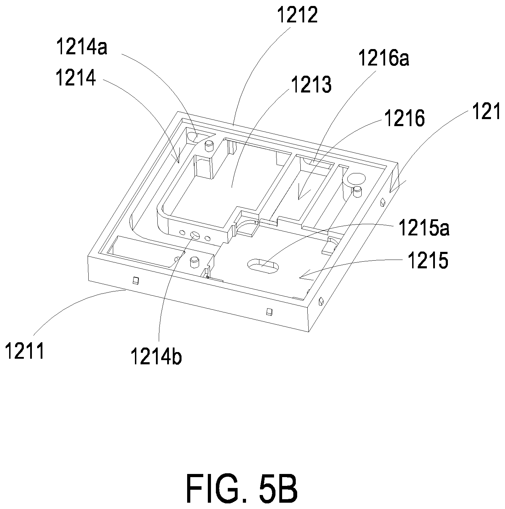

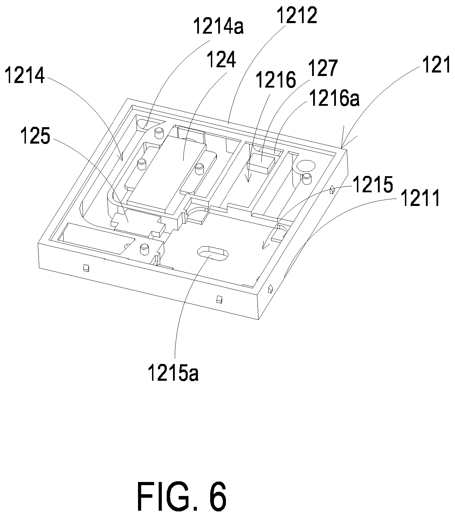

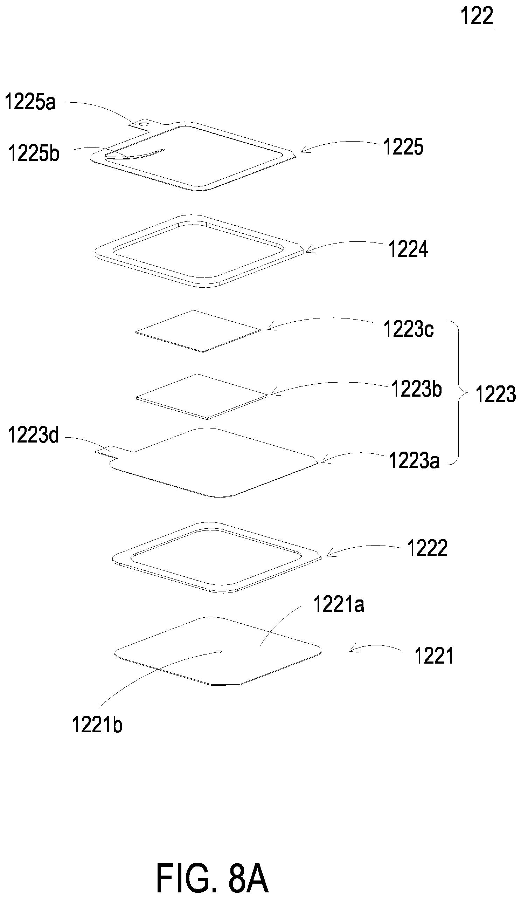

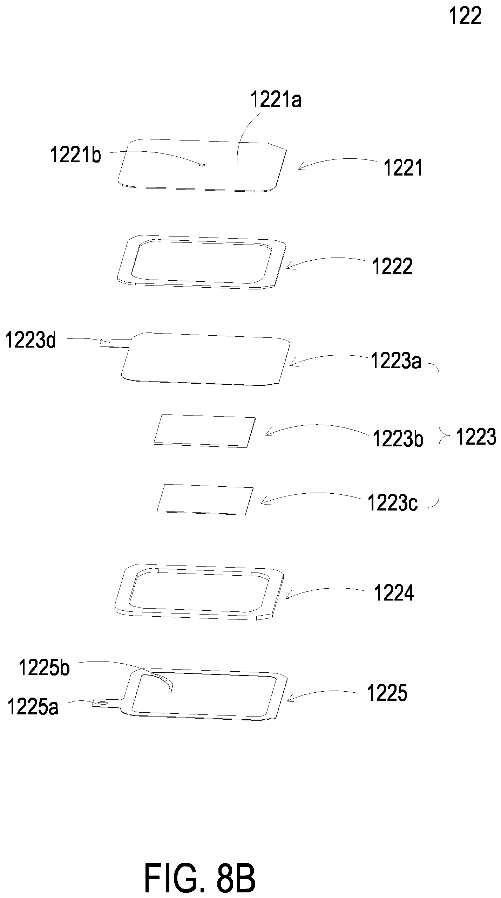

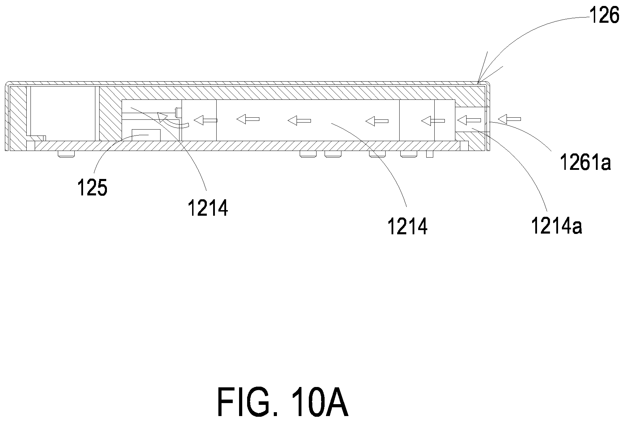

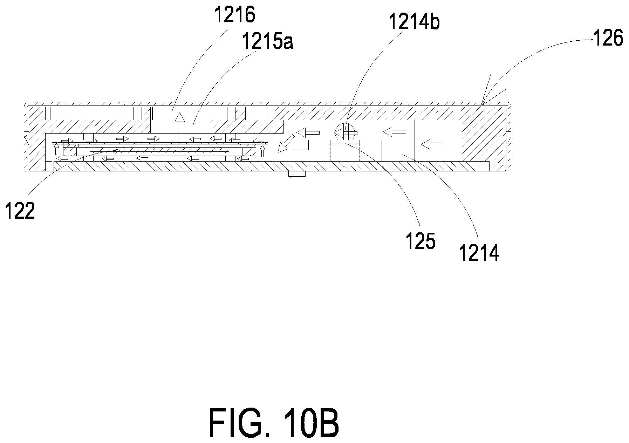

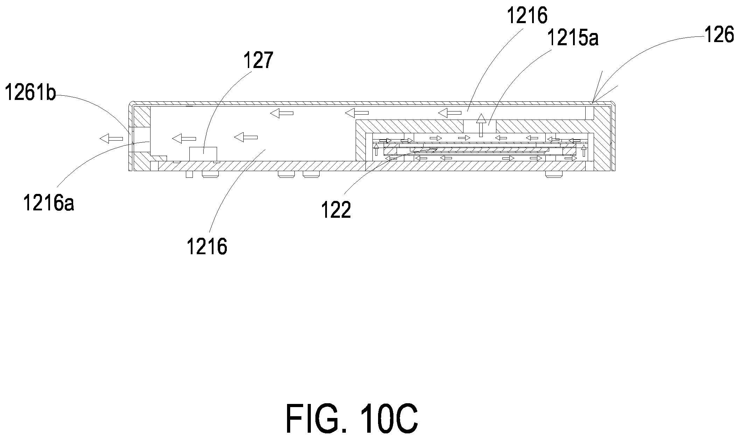

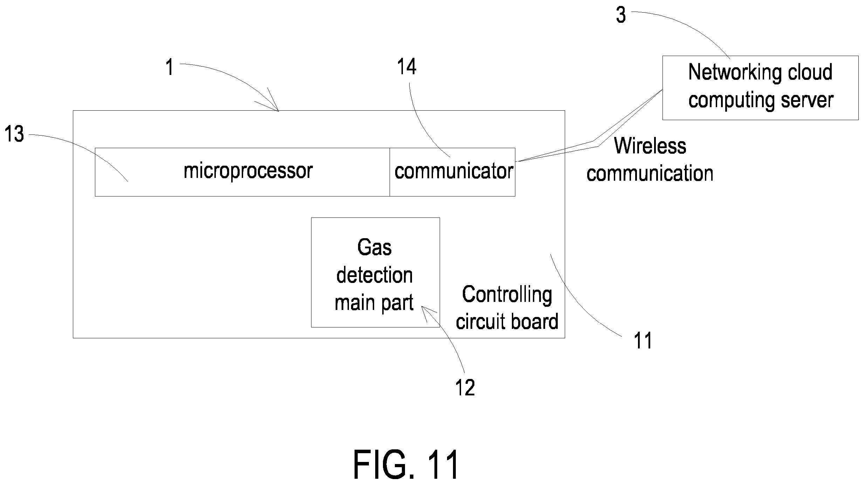

For understanding the implementation of the indoor air cleaning system with networking mechanism in the present disclosure, followings are the detailed descriptions of the gas detection module of the gas detector 1. Please refer to FIG. 3A to FIG. 11. In the embodiment, the gas detection module includes a controlling circuit board 11, a gas detection main part 12, a microprocessor 13 and a communicator 14. The gas detection main part 12, the microprocessor 13 and the communicator 14 are integrally packaged on the controlling circuit board 11 and electrically connected to each other. In the embodiment, the microprocessor 13 and the communicator 14 are mounted on the controlling circuit board 11. The microprocessor 13 controls the driving signal of the gas detection main part 12 for enabling the detection. In this way, the gas detection main part 12 detects the air pollution and outputs the air pollution information, and the microprocessor 13 receives, processes and provides the air pollution information to the communicator 14 for externally transmitting to the networking cloud computing server 3 via IoT communication.

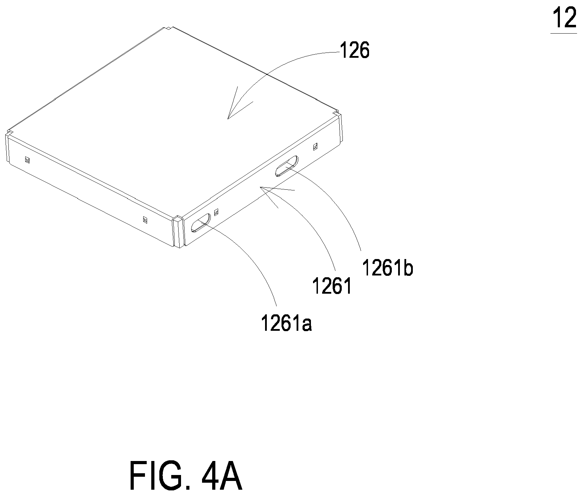

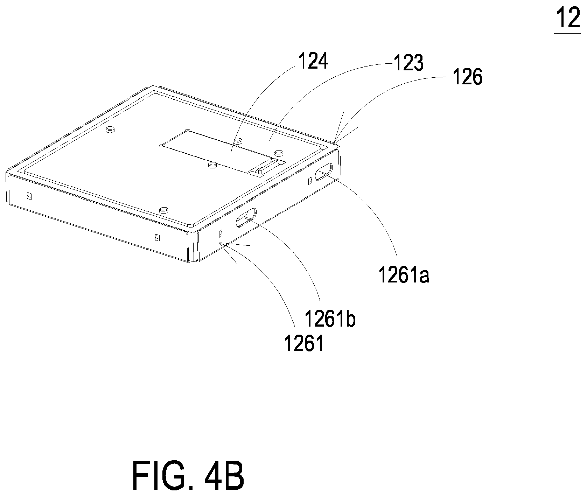

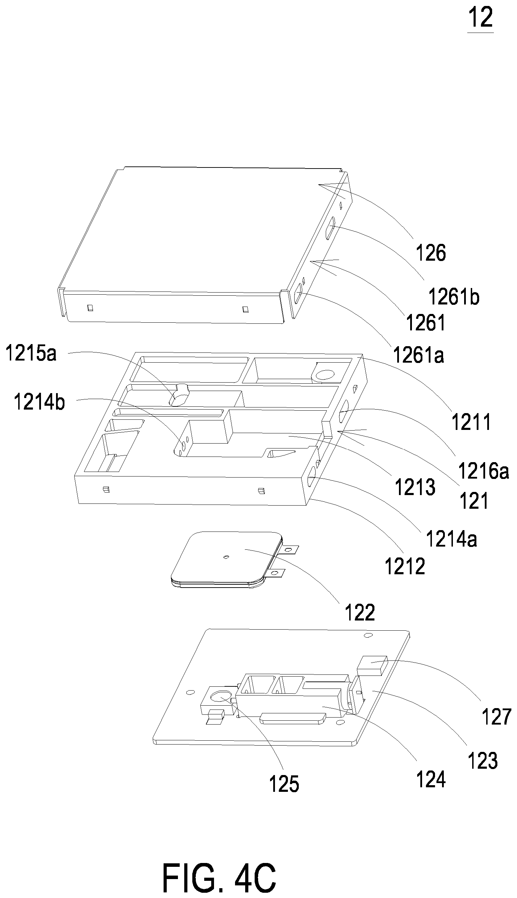

Please refer to FIG. 4A to FIG. 9A. The gas detection main part 12 includes a base 121, a piezoelectric actuator 122, a driving circuit board 123, a laser component 124, a particulate sensor 125, and an outer cover 126. In the embodiment, the base 121 includes a first surface 1211, a second surface 1212, a laser loading region 1213, a gas-inlet groove 1214, a gas-guiding-component loading region 1215 and a gas-outlet groove 1216. The first surface 1211 and the second surface 1212 are two surfaces opposite to each other. The laser loading region 1213 is hollowed out from the first surface 1211 toward the second surface 1212. The outer cover 126 covers the base 121 and includes a side plate 1261. The side plate 1261 has an inlet opening 1261a and an outlet opening 1261b. The gas-inlet groove 1214 is concavely formed from the second surface 1212 and disposed adjacent to the laser loading region 1213. The gas-inlet groove 1214 includes a gas-inlet 1214a and two lateral walls. The gas-inlet 1214a is in communication with an environment outside the base 121, and is spatially corresponding in position to an inlet opening 1261a of the outer cover 126. Two transparent windows 1214b are opened on the two lateral walls of the gas-inlet groove 1214 and are in communication with the laser loading region 1213. Therefore, the first surface 1211 of the base 121 is covered and attached by the outer cover 126, and the second surface 1212 is covered and attached by the driving circuit board 123, so that an inlet path is defined by the gas-inlet groove 1214. In the embodiment, the gas-guiding-component loading region 1215 is concavely formed from the second surface 1212 and in communication with the gas-inlet groove 1214. A ventilation hole 1215a penetrates a bottom surface of the gas-guiding-component loading region 1215. The gas-guiding-component loading region 1215 includes four positioning protrusions 1215b disposed at four corners of the gas-guiding-component loading region 1215, respectively. In the embodiment, the gas-outlet groove 1216 includes a gas-outlet 1216a, and the gas-outlet 1216a is spatially corresponding to the outlet opening 1261b of the outer cover 126. The gas-outlet groove 1216 includes a first section 1216b and a second section 1216c. The first section 1216b is concavely formed out from the first surface 1211 in a region spatially corresponding to a vertical projection area of the gas-guiding-component loading region 1215. The second section 1216c is hollowed out from the first surface 1211 to the second surface 1212 in a region where the first surface 1211 is extended from the vertical projection area of the gas-guiding-component loading region 1215. The first section 1216b and the second section 1216c are connected to form a stepped structure. Moreover, the first section 1216b of the gas-outlet groove 1216 is in communication with the ventilation hole 1215a of the gas-guiding-component loading region 1215, and the second section 1216c of the gas-outlet groove 1216 is in communication with the gas-outlet 1216a. In that, when first surface 1211 of the base 121 is attached and covered by the outer cover 126 and the second surface 1212 of the base 121 is attached and covered by the driving circuit board 123, the gas-outlet groove 1216 and the driving circuit board 123 collaboratively define an outlet path.

In the embodiment, the laser component 124 and the particulate sensor 125 are disposed on and electrically connected to the driving circuit board 123 and located within the base 121. In order to clearly describe and illustrate the positions of the laser component 124 and the particulate sensor 125 in the base 121, the driving circuit board 123 is intentionally omitted. The laser component 124 is accommodated in the laser loading region 1213 of the base 121, and the particulate sensor 125 is accommodated in the gas-inlet groove 1214 of the base 121 and is aligned to the laser component 124. In addition, the laser component 124 is spatially corresponding to the transparent window 1214b, so that a light beam emitted by the laser component 124 passes through the transparent window 1214b and is irradiated into the gas-inlet groove 1214. A light beam path emitted from the laser component 124 passes through the transparent window 1214b and extends in an orthogonal direction perpendicular to the gas-inlet groove 1214. In the embodiment, a projecting light beam emitted from the laser component 124 passes through the transparent window 1214b and enters the gas-inlet groove 1214 to irradiate the suspended particles contained in the gas passing through the gas-inlet groove 1214. When the suspended particles contained in the gas are irradiated and generate scattered light spots, the scattered light spots are received and calculated by the particulate sensor 125, which is in an orthogonal direction perpendicular to the gas-inlet groove 1214, to obtain the gas detection information.

In the embodiment, the piezoelectric actuator 122 is accommodated in the square-shaped gas-guiding-component loading region 1215 of the base 121. In addition, the gas-guiding-component loading region 1215 is in fluid communication with the gas-inlet groove 1214. When the piezoelectric actuator 122 is enabled, the gas in the gas-inlet groove 1214 is inhaled by the piezoelectric actuator 122, so that the gas flows into the piezoelectric actuator 122, and is transported into the gas-outlet groove 1216 through the ventilation hole 1215a of the gas-guiding-component loading region 1215. Moreover, the driving circuit board 123 covers the second surface 1212 of the base 121, and the laser component 124 is positioned and disposed on the driving circuit board 123, and is electrically connected to the driving circuit board 123. The particulate sensor 125 is also positioned and disposed on the driving circuit board 123 and electrically connected to the driving circuit board 123. In that, when the outer cover 126 covers the base 121, the inlet opening 1261a is spatially corresponding to the gas-inlet 1214a of the base 121, and the outlet opening 126lb is spatially corresponding to the gas-outlet 1216a of the base 121.

In the embodiment, the piezoelectric actuator 122 includes a gas-injection plate 1221, a chamber frame 1222, an actuator element 1223, an insulation frame 1224 and a conductive frame 1225. In the embodiment, the gas-injection plate 1221 is made by a flexible material and includes a suspension plate 1221a and a hollow aperture 1221b. The suspension plate 1221a is a sheet structure and is permitted to undergo a bending deformation. Preferably but not exclusively, the shape and the size of the suspension plate 1221a are corresponding to the inner edge of the gas-guiding-component loading region 1215, but not limited thereto. The hollow aperture 1221b passes through a center of the suspension plate 1221a, so as to allow the gas to flow therethrough. Preferably but not exclusively, in the embodiment, the shape of the suspension plate 1221a is selected from the group consisting of a square, a circle, an ellipse, a triangle and a polygon, but not limited thereto.

In the embodiment, the chamber frame 1222 is carried and stacked on the gas-injection plate 1221. In addition, the shape of the chamber frame 1222 is corresponding to the gas-injection plate 1221. The actuator element 1223 is carried and stacked on the chamber frame 1222 and collaboratively defines a resonance chamber 1226 with the chamber frame 1222 and the gas-injection plate 1221. The insulation frame 1224 is carried and stacked on the actuator element 1223 and the appearance of the insulation frame 1224 is similar to that of the chamber frame 1222. The conductive frame 1225 is carried and stacked on the insulation frame 1224, and the appearance of the conductive frame 1225 is similar to that of the insulation frame 1224. In addition, the conductive frame 1225 includes a conducting pin 1225a and a conducting electrode 1225b. The conducting pin 1225a is extended outwardly from an outer edge of the conductive frame 1225, and the conducting electrode 1225b is extended inwardly from an inner edge of the conductive frame 1225. Moreover, the actuator element 1223 further includes a piezoelectric carrying plate 1223a, an adjusting resonance plate 1223b and a piezoelectric plate 1223c. The piezoelectric carrying plate 1223a is carried and stacked on the chamber frame 1222. The adjusting resonance plate 1223b is carried and stacked on the piezoelectric carrying plate 1223a. The piezoelectric plate 1223c is carried and stacked on the adjusting resonance plate 1223b. The adjusting resonance plate 1223b and the piezoelectric plate 1223c are accommodated in the insulation frame 1224. The conducting electrode 1225b of the conductive frame 1225 is electrically connected to the piezoelectric plate 1223c. In the embodiment, the piezoelectric carrying plate 1223a and the adjusting resonance plate 1223b are made by a conductive material. The piezoelectric carrying plate 1223a includes a piezoelectric pin 1223d. The piezoelectric pin 1223d and the conducting pin 1225a are electrically connected to a driving circuit (not shown) on the driving circuit board 123, so as to receive a driving signal, such as a driving frequency and a driving voltage. Through this structure, a circuit is formed by the piezoelectric pin 1223d, the piezoelectric carrying plate 1223a, the adjusting resonance plate 1223b, the piezoelectric plate 1223c, the conducting electrode 1225b, the conductive frame 1225 and the conducting pin 1225a for transmitting the driving signal. Moreover, the insulation frame 1224 is insulated between the conductive frame 1225 and the actuator element 1223, so as to avoid the occurrence of a short circuit. Thereby, the driving signal is transmitted to the piezoelectric plate 1223c. After receiving the driving signal, the piezoelectric plate 1223c deforms due to the piezoelectric effect, and the piezoelectric carrying plate 1223a and the adjusting resonance plate 1223b are further driven to generate the bending deformation in the reciprocating manner.

Furthermore, in the embodiment, the adjusting resonance plate 1223b is located between the piezoelectric plate 1223c and the piezoelectric carrying plate 1223a and served as a cushion between the piezoelectric plate 1223c and the piezoelectric carrying plate 1223a. Thereby, the vibration frequency of the piezoelectric carrying plate 1223a is adjustable. Basically, the thickness of the adjusting resonance plate 1223b is greater than the thickness of the piezoelectric carrying plate 1223a, and the vibration frequency of the actuator element 1223 can be adjusted by adjusting the thickness of the adjusting resonance plate 1223b.

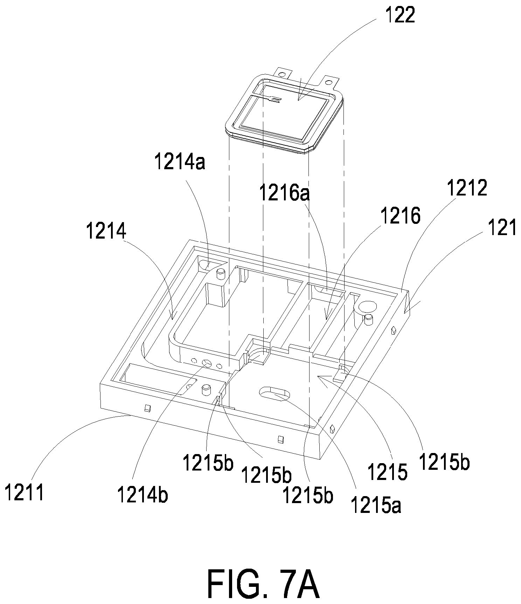

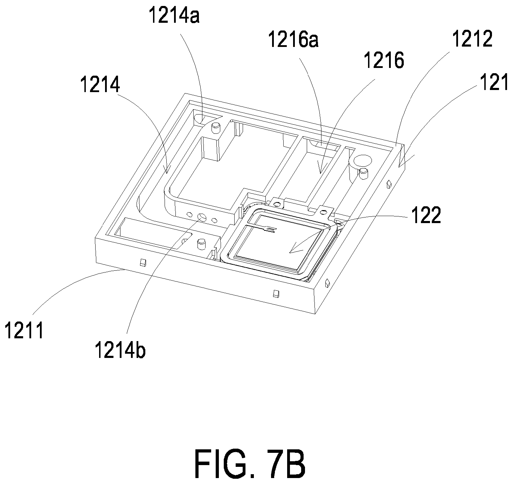

Please further refer to FIG. 7A, FIG. 7B, FIG.8A, FIG. 8B and FIG. 9A. In the embodiment, the gas-injection plate 1221, the chamber frame 1222, the actuator element 1223, the insulation frame 1224 and the conductive frame 1225 are stacked and positioned in the gas-guiding-component loading region 1215 sequentially, so that the piezoelectric actuator 122 is supported and positioned in the gas-guiding-component loading region 1215. A clearance 1221c is defined between the suspension plate 1221a and an inner edge of the gas-guiding-component loading region 1215 for gas flowing therethrough. In the embodiment, a flowing chamber 1227 is formed between the gas-injection plate 1221 and the bottom surface of the gas-guiding-component loading region 1215. The flowing chamber 1227 is in communication with the resonance chamber 1226 between the actuator element 1223, the chamber frame 1222 and the gas-injection plate 1221 through the hollow aperture 1221b of the gas-injection plate 1221. By controlling the vibration frequency of the gas in the resonance chamber 1226 to be close to the vibration frequency of the suspension plate 1221a, the Helmholtz resonance effect is generated between the resonance chamber 1226 and the suspension plate 1221a, so as to improve the efficiency of gas transportation. When the piezoelectric plate 1223c is moved away from the bottom surface of the gas-guiding-component loading region 1215, the suspension plate 1221a of the gas-injection plate 1221 is driven to move away from the bottom surface of the gas-guiding-component loading region 1215 by the piezoelectric plate 1223c. In that, the volume of the flowing chamber 1227 is expanded rapidly, the internal pressure of the flowing chamber 1227 is decreased to form a negative pressure, and the gas outside the piezoelectric actuator 122 is inhaled through the clearance 1221c and enters the resonance chamber 1226 through the hollow aperture 1221b. Consequently, the pressure in the resonance chamber 1226 is increased to generate a pressure gradient. When the suspension plate 1221a of the gas-injection plate 1221 is driven by the piezoelectric plate 1223c to move toward the bottom surface of the gas-guiding-component loading region 1215, the gas in the resonance chamber 1226 is discharged out rapidly through the hollow aperture 1221b, and the gas in the flowing chamber 1227 is compressed, thereby the converged gas is quickly and massively ejected out of the flowing chamber 1227 under the condition close to an ideal gas state of the Bernoulli's law, and transported to the ventilation hole 1215a of the gas-guiding-component loading region 1215.

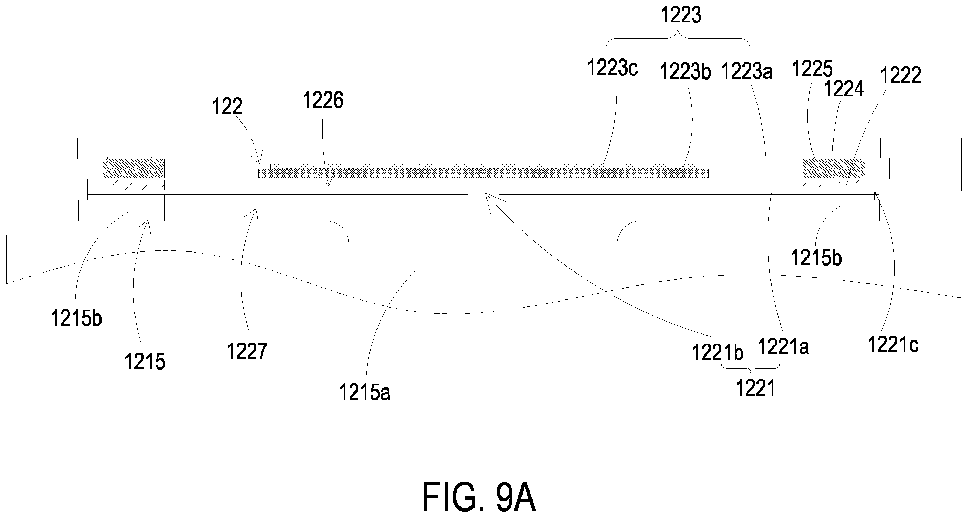

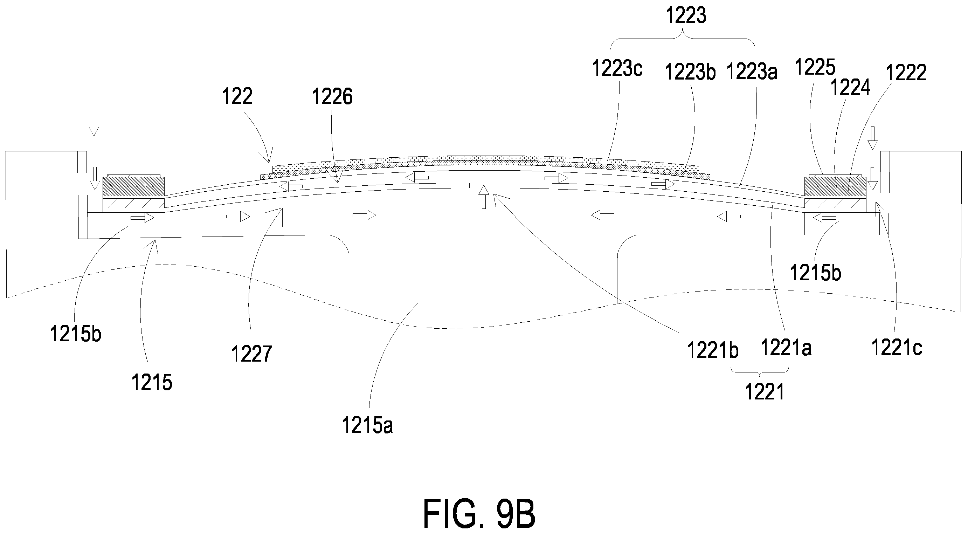

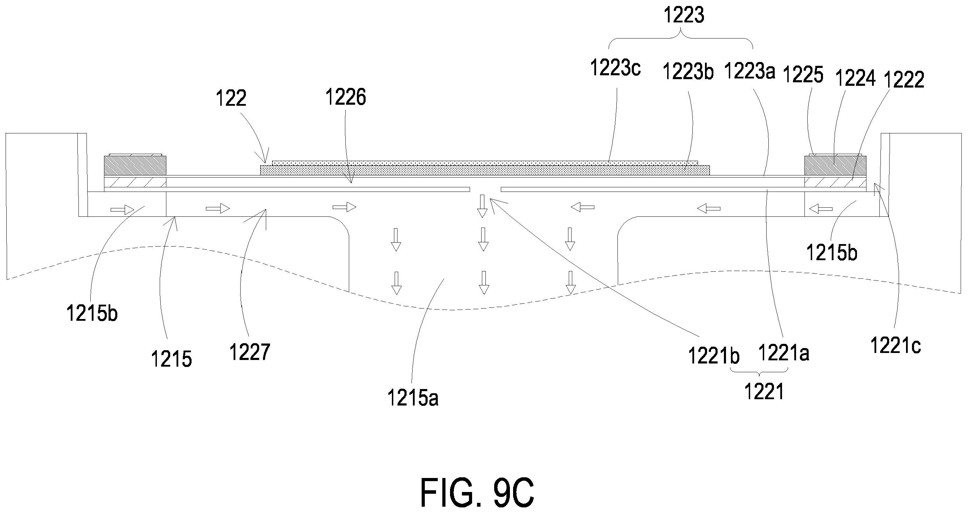

By repeating the above operation steps shown in FIG. 9B and FIG. 9C, the piezoelectric plate 1223c is driven to generate the bending deformation in a reciprocating manner. According to the principle of inertia, since the gas pressure inside the resonance chamber 1226 is lower than the equilibrium gas pressure after the converged gas is ejected out, the gas is introduced into the resonance chamber 1226 again. Moreover, the vibration frequency of the gas in the resonance chamber 1226 is controlled to be close to the vibration frequency of the piezoelectric plate 1223c, so as to generate the Helmholtz resonance effect to achieve the gas transportation at high speed and in large quantities. The gas is inhaled through the gas-inlet 1214a on the outer cover 126, flows into the gas-inlet groove 1214 of the base 121 through the gas-inlet 1214a, and is transported to the position of the particulate sensor 125. The piezoelectric actuator 122 is enabled continuously to inhale the gas into the inlet path, and facilitate the gas outside the gas detection module to be introduced rapidly, flow stably, and transported above the particulate sensor 125. At this time, a projecting light beam emitted from the laser component 124 passes through the transparent window 1214b to irritate the suspended particles contained in the gas flowing above the particulate sensor 125 in the gas-inlet groove 1214. When the suspended particles contained in the gas are irradiated and generate scattered light spots, the scattered light spots are received and calculated by the particulate sensor 125 for obtaining related information about the sizes and the concentration of the suspended particles contained in the gas. Moreover, the gas above the particulate sensor 125 is continuously driven and transported by the piezoelectric actuator 122, flows into the ventilation hole 1215a of the gas-guiding-component loading region 1215, and is transported to the gas-outlet groove 1216. At last, after the gas flows into the gas outlet groove 1216, the gas is continuously transported into the gas-outlet groove 1216 by the piezoelectric actuator 122, and thus the gas in the gas-outlet groove 1216 is pushed to discharge through the gas-outlet 1216a and the outlet opening 1261b.

The gas detector 1 of the present disclosure not only can detect the particulate matters in the gas, but also can detect the gas characteristics of the introduced gas, for example, to determine whether the gas is formaldehyde, ammonia, carbon monoxide, carbon dioxide, oxygen, ozone, or the like. Therefore, in some embodiments, the gas detector 1 of the present disclosure further includes a gas sensor 127 positioned and disposed on the driving circuit board 123, electrically connected to the driving circuit board 123, and accommodated in the gas-outlet groove 1216, so as to detect the gas characteristics of the introduced gas. Preferably but not exclusively, in an embodiment, the gas sensor 127 includes a volatile-organic-compound sensor for detecting the information of carbon dioxide (CO₂) or volatile organic compounds (TVOC). Preferably but not exclusively, in an embodiment, the gas sensor 127 includes a formaldehyde sensor for detecting the information of formaldehyde (HCHO) gas. Preferably but not exclusively, in an embodiment, the gas sensor 127 includes a bacteria sensor for detecting the information of bacteria or fungi. Preferably but not exclusively, in an embodiment, the gas sensor 127 includes a virus sensor for detecting the information of virus in the gas. Preferably but not exclusively, the gas sensor 127 is a temperature and humidity sensor for detecting the temperature and humidity information of gas.

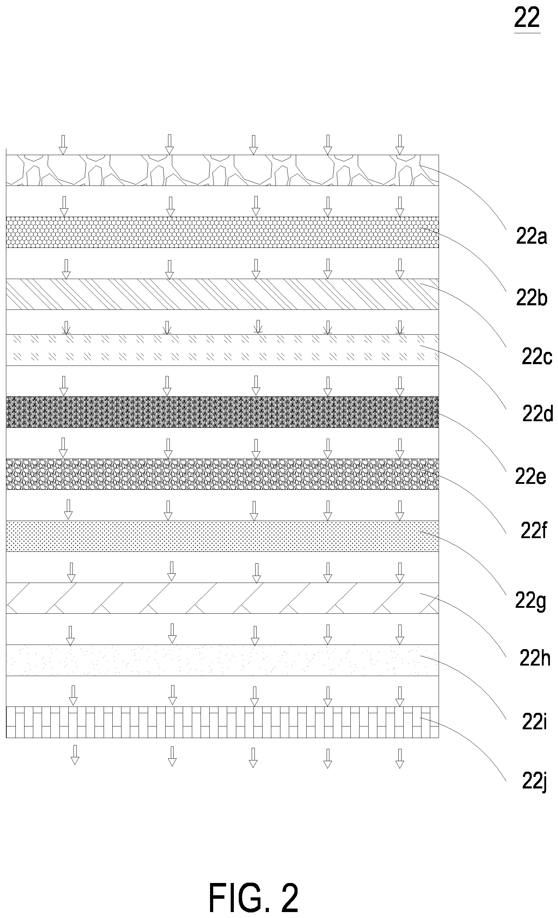

Please refer to FIG. 2. The gas guider 21 of the gas molecule controlling hardware apparatus 2 is controlled and enabled to guide the air pollution to pass through the filter element 22 for filtration. In the embodiment, the filter element 22 includes a MERV (Minimum Efficiency Reporting Value) 8 filter screen or above or a high efficiency particulate air (HEPA) filter screen which is configured to absorb the chemical smoke, the bacteria, the dust particles and the pollen contained in the air pollution for achieving the effect of filtration and purification. Notably, the HEPA filter screen in the present disclosure is a HEPA 10 filter screen or above with a dust containing capacity larger than 12000 mg. The filter element 22 is further combined with a material for providing sterilization effect in physical or chemical means by passing therethrough the air pollution, and the airflow of the gas guider 21 flows in the path indicated by the arrows. The filter element 22 is combined with a decomposition layer through coating for sterilizing in chemical means by passing therethrough the air pollution. Preferably but not exclusively, the decomposition layer includes an activated carbon 22a configured to remove organic and inorganic substances in the air pollution, and remove colored and odorous substances. Notably, the activated carbon 22a in the present disclosure has an absorptive capacity of formaldehyde larger than 1500 mg. Preferably but not exclusively, the decomposition layer includes a cleansing factor containing chlorine dioxide layer 22b configured to inhibit viruses, bacteria, fungi, influenza A, influenza B, enterovirus and norovirus in the air pollution, and the inhibition ratio can reach 99% and more, thereby reducing the cross-infection of viruses. Preferably but not exclusively, the decomposition layer includes an herbal protective layer 22c extracted from ginkgo and Japanese Rhus chinensis configured to resist allergy effectively and destroy a surface protein of influenza virus (such as H1N1 influenza virus) passing therethrough. Preferably but not exclusively, the decomposition layer includes a silver ion 22d configured to inhibit viruses, bacteria and fungi contained in the air pollution. Preferably but not exclusively, the decomposition layer includes a zeolite 22e configured to remove ammonia nitrogen, heavy metals, organic pollutants, Escherichia coli, phenol, chloroform and anionic surfactants. Furthermore, in some embodiments, the filter element 22 is combined with a light irradiation element to sterilize in chemical means by passing therethrough the air pollution. Preferably but not exclusively, the light irradiation element is a photo-catalyst unit including a photo catalyst 22f and an ultraviolet lamp 22g. When the photo catalyst 22f is irradiated by the ultraviolet lamp 22g, the light energy is converted into the electrical energy, thereby decomposing harmful substances and disinfects bacteria contained in the air pollution, so as to achieve the effects of filtration and purification. Notably, the power of the ultraviolet lamp 22g is larger than 120 mW. Preferably but not exclusively, the light irradiation element is a photo-plasma unit including a nanometer irradiation tube 22h. When the introduced air pollution is irradiated by the nanometer irradiation tube 22h, the oxygen molecules and water molecules contained in the air pollution are decomposed into high oxidizing photo-plasma, and an ion flow capable of destroying organic molecules is generated. In that, volatile formaldehyde, volatile toluene and volatile organic compounds (VOC) contained in the air pollution are decomposed into water and carbon dioxide, so as to achieve the effects of filtration and purification. Moreover, in some embodiments, the filter element 22 is combined with a decomposition unit to sterilize in chemical means by passing therethrough the air pollution. Preferably but not exclusively, the decomposition unit is a negative ion unit 22i which makes the suspended particles carrying positive charges in the air pollution to adhere to negative charges, thereby achieving the effects of filtration and purification. Preferably but not exclusively, the decomposition unit is a plasma ion unit 22j. The oxygen molecules and water molecules contained in the air pollution are decomposed into positive hydrogen ions (H⁺) and negative oxygen ions (O²⁻) by the plasma ion. The substances attached with water around the ions are adhered on the surfaces of viruses and bacteria and converted into OH radicals with extremely strong oxidizing power, thereby removing hydrogen (H) from the protein on the surfaces of viruses and bacteria, and thus decomposing (oxidizing) the protein, so as to filter the introduced air pollution and achieve the effects of filtering and purification.

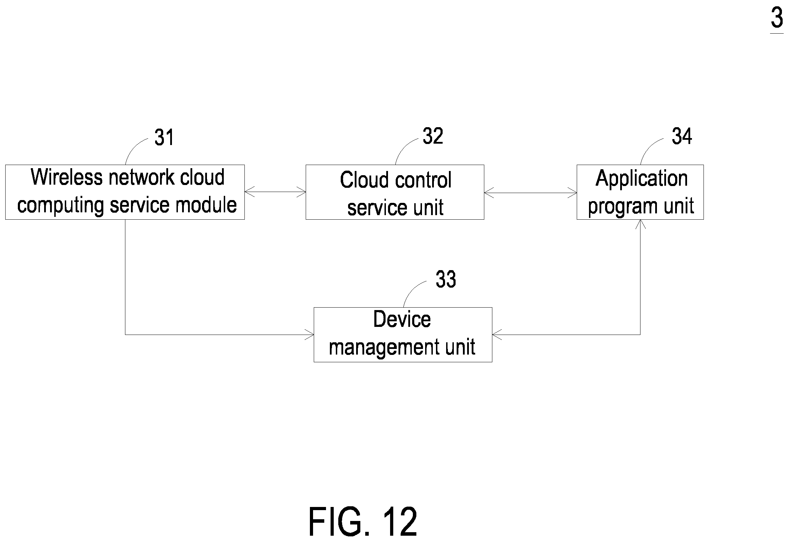

Please refer to FIG. 12. In the embodiment, the networking cloud computing server 3 includes a wireless network cloud computing service module 31, a cloud control service unit 32, a device management unit 33 and an application program unit 34. The wireless network cloud computing service module 31 receives the outdoor air pollution information of the outdoor field B and the indoor air pollution information of the indoor field A, receives communication information of devices (the gas molecule controlling hardware apparatuses 2, the air conditioning device 2h), and issues the control instruction. Moreover, the wireless network cloud computing service module 31 receives the air pollution information of the indoor field A and the outdoor field B and transmits thereof to the cloud control service unit 32 to store and form an big data database of air pollution data, and performs the intelligence computing and comparison based on the big data database of air pollution data for issuing the control instruction to the wireless network cloud computing service module 31 and then to the devices (the gas molecule controlling hardware apparatuses 2, the air conditioning device 2h) for enablement. The device management unit 33 receives the communication information through the wireless network cloud computing service module 31 for managing the user login and device binding, and the device management information can be provided to the application program unit 34 for system control and management. The application program unit 34 can also display and inform the air pollution information obtained from the cloud control service unit 32, so the user can know the real-time status of air pollution removal through the mobile phone or the communication device. Moreover, the user can control the operation of the indoor air cleaning system through the application program unit 34 of the mobile phone or the communication device.

In conclusion, the present disclosure provides an indoor air cleaning system with networking mechanism for detecting and purifying the air pollution in the indoor field to a level close to zero. Through arranging a plurality of gas detectors, at least one gas molecule controlling hardware apparatus, at least one air conditioning device and a networking cloud computing server, and communicating the gas detectors arranged in the indoor field and the outdoor field and the gas detectors installed inside each gas molecule controlling hardware apparatus and each air conditioning device with the cloud to form an intelligent linking system, the gas guiders in the gas molecule controlling hardware apparatus and the air conditioning device can be enabled in real time for monitoring the air quality of the indoor field anytime and anywhere, and for adjusting the temperature and humidity of the indoor field by the air conditioning device. Through the indoor air cleaning system with networking mechanism as described above, the temperature of the indoor field can be obtained, the level of carbon dioxide difference between the indoor field and the outdoor field can be close to zero, and PM2.5 and other air pollutants can be purified to cleanroom class with a level close to zero. At the same time, the air pollution in the indoor field is detected and intelligently compared with the air quality of surrounding environment, and the gas volume of the gas guider is adjusted in real time based on the air quality, so that the operation of the gas molecule controlling hardware apparatus can be effectively adjusted in an energy saving manner, and the gas guiding noise also can be reduced to a level close to zero, thereby achieving energy saving in an environmentally friendly manner. Moreover, after the required equivalent of clean air delivery rate (CADR) of the indoor field is intelligently (AI) computed and confirmed by the networking cloud computing server, the number and arrangement of the gas molecule controlling hardware apparatuses and the optimal CADR of the gas guiders can be decided based on the required equivalent, thereby achieving the purification procedure for reaching cleanroom class with a level of air pollution close to zero through real time air pollution detection, achieving a cleanness of cleanroom class, and achieving the optimal cost effectiveness of the purification procedure. Consequently, the present disclosure is industrial valuable.

## Claims

1. An indoor air cleaning system with networking mechanism, **characterized by** comprising:
a plurality of gas detectors (1) arranged in an indoor field (A) and an outdoor field (B) for detecting air pollution information and temperature and humidity information of gas;
a networking cloud computing server (3) receiving the air pollution information and the temperature and humidity information of gas of the indoor field (A) and the outdoor field (B), storing thereof to form a big data database of air pollution data, and intelligently issuing a control instruction; and
at least one gas molecule controlling hardware apparatus (2) disposed in the indoor field (A) and comprising at least one of the plurality of gas detectors (1) disposed therein, wherein the at least one gas molecule controlling hardware apparatus (2) comprises at least one gas exchange device (2a), at least one purifier (2b), at least one fan filter unit (2c), at least one exhaust device (2d), at least one smoke exhaust system (2e), at least one dehumidifier (2f), at least one vacuum cleaner (2g) and at least one air conditioning device (2h), and each of the at least one gas molecule controlling hardware apparatus (2) comprises at least one gas guider (21), at least one filter element (22) and at least one driving controller (23), wherein a gas detector (1) disposed in the at least one gas molecule controlling hardware apparatus (2) is electrically connected to the at least one driving controller (23), and the gas detector (1) receives the control instruction via Internet of Things (IoT) communication and provides the control instruction to the at least one driving controller (23) for controlling the at least one gas guider (21) to execute a purification procedure for reaching cleanroom class with a level of air pollution close to zero through exchanging a gas in the indoor field (A), adjusting a temperature and a humidity of the indoor field (A), and guiding an air pollution to pass through the at least one filter element (22) multiple times, and wherein the gas detector (1) outputs the air pollution information and the temperature and humidity information of gas of the indoor field (A),
wherein the networking cloud computing server (3) receives the air pollution information and the temperature and humidity information of gas detected by the plurality of gas detectors (1), performs an intelligence computing for comparison based on the big data database of air pollution data, and intelligently selects and issues the control instruction to the at least one gas guider (21) of the at least one gas molecule controlling hardware apparatus (2) for enabling the operation of the at least one gas guider (21), thereby executing the purification procedure for reaching cleanroom class with a level of air pollution close to zero through guiding the air pollution in the indoor field (A) to pass through the at least one filter element (22), and achieving a cleanness of cleanroom class through detecting and purifying the air pollution in real time.

2. The indoor air cleaning system with networking mechanism as claimed in claim 1, wherein the indoor field (A) comprises at least one gas introducing opening (C1) and at least one gas discharging opening (C2), the gas exchange device (2a) comprises a gas guiding channel (24), the gas guiding channel (24) comprises a gas introducing port (24a) corresponding to the gas introducing opening (C1) of the indoor field (A), a circulation returning port (24b) communicated with the indoor field (A), and a gas filtering channel (24c) communicated with the indoor field (A), a gas exchanger (25) is disposed near the circulation returning port (24b), and the gas filtering channel (24c) has the at least one gas guider (21) and the at least one filter element (22) disposed therein, and wherein the networking cloud computing server (3) intelligently computes to compare the air pollution information and the temperature and humidity information of gas of the indoor field (A) and of the outdoor field (B), and when a level of the air pollution information of the indoor field (A) is higher than that of the outdoor field (B), the networking cloud computing server (3) issues the control instruction via IoT communication to the gas detector (1) inside the gas exchange device (2a) for controlling the at least one driving controller (23) to enable the at least one gas guider (21) and the gas exchanger (25), so that the gas in the outdoor field (B) is introduced into the gas filtering channel (24c) through the gas introducing opening (C1), filtered through passing through the at least one filter element (22), and enters the indoor field (A), and at the same time, a gas in the indoor field (A) enters the gas filtering channel (24c) again for circulation and filtration, thereby achieving a temperature adjustment and a gas exchange.

3. The indoor air cleaning system with networking mechanism as claimed in claim 2, wherein the air pollution information of the indoor field (A) and the outdoor field (B) is a level of carbon dioxide (CO₂), and the gas exchange is to reach a level of carbon dioxide difference between the indoor field (A) and the outdoor field (B) close to zero; and wherein the gas exchange device (2a) is a fresh air exchanging system, an energy recovery ventilation system, or a heating, ventilation and air conditioning (HVAC) system, and when the gas exchange device (2a) is enabled to perform the gas exchange, a positive pressure higher than 0 Pa is maintained in the indoor field (A), thereby preventing the air pollution in the outdoor field (B) from entering the indoor field (A).

4. The indoor air cleaning system with networking mechanism as claimed in claim 1, wherein the purifier (2b) is disposed in the indoor field (A) in a plug-in manner, and the networking cloud computing server (3) issues the control instruction via IoT communication to the gas detector (1) inside the purifier (2b) for controlling the at least one driving controller (23) to enable the at least one gas guider (21), so that the air pollution in the indoor field (A) is guided to pass through the at least one filter element (22) for filtration and purification, and a purified air is further introduced into the indoor field (A), thereby guiding the air pollution in the indoor field (A) to pass through the at least one filter element (22) multiple times for executing the purification procedure for reaching cleanroom class with a level of air pollution close to zero.

5. The indoor air cleaning system with networking mechanism as claimed in claim 1, wherein the fan filter unit (FFU) (2c) is disposed in the indoor field (A) in a build-in manner, the fan filter unit (FFU) (2c) comprises a gas guiding channel (24), the gas guiding channel (24) comprises a circulation returning port (24b) communicated with the indoor field (A) and a gas filtering channel (24c) communicated with the indoor field (A), and the gas filtering channel (24c) has the at least one gas guider (21) and the at least one filter element (22) disposed therein, and wherein the networking cloud computing server (3) issues the control instruction via IoT communication to the gas detector (1) inside the fan filter unit (FFU) (2c) for controlling the at least one driving controller (23) to enable the at least one gas guider (21), so that the air pollution in the indoor field (A) is guided to enter the gas filtering channel (24c) through the circulation returning port (24b) and pass through the at least one filter element (22) for filtration and purification, and a purified air is further introduced into the indoor field (A), thereby guiding the air pollution in the indoor field (A) to enter the gas guiding channel (24) multiple times for effectively inhibiting a gas backflow effect during circulation and filtration and achieving the purification procedure for reaching cleanroom class with a level of air pollution close to zero.

6. The indoor air cleaning system with networking mechanism as claimed in claim 2, wherein the exhaust device (2d) is disposed in the indoor field (A) in a build-in manner, and is corresponding to the gas discharging opening (C2) for exhausting a gas to the outdoor field (B), and wherein the networking cloud computing server (3) issues the control instruction via IoT communication to the gas detector (1) inside the exhaust device (2d) for controlling the at least one driving controller (23) to enable the at least one gas guider (21), so that the air pollution in the indoor field (A) is guided by the at least one gas guider (21) to pass through the at least one filter element (22) for filtration and purification and exhaust to the outdoor field (B), thereby achieving the purification procedure for reaching cleanroom class with a level of air pollution close to zero.

7. The indoor air cleaning system with networking mechanism as claimed in claim 2, wherein the smoke exhaust system (2e) is disposed in a kitchen of the indoor field (A), the smoke exhaust system (2e) comprises a gas discharging channel (2ea) disposed above a cooker (H), corresponding to the gas discharging opening (C2) and communicated with the outdoor field (B), and the gas discharging channel (2ea) has the at least one gas guider (21), the at least one filter element (22) and the at least one driving controller (23) disposed therein; the smoke exhaust system (2e) further comprises a smoke discharging main part (2eb) disposed in front of the cooker (H), corresponding to the gas discharging opening (C2) and communicated with the outdoor field (B), and the smoke discharging main part (2eb) has the at least one gas guider (21), the at least one filter element (22) and the at least one driving controller (23) disposed therein; and each of the gas discharging channel (2ea) and the smoke discharging main part (2eb) has a gas detector (1) installed therein and electrically connected to the at least one driving controller (23); and wherein the networking cloud computing server (3) issues the control instruction via IoT communication to respective gas detectors (1) inside the gas discharging channel (2ea) and the smoke discharging main part (2eb) for controlling respective driving controllers (23) to enable respective gas guiders (21), so that the air pollution in kitchen of the indoor field (A) is guided to enter the gas discharging channel (2ea) and the smoke discharging main part (2eb) and pass through the at least one filter element (22) for filtration and purification, and exhaust to the outdoor field (B), thereby achieving the purification procedure for reaching cleanroom class with a level of air pollution close to zero.

8. The indoor air cleaning system with networking mechanism as claimed in claim 1, wherein the dehumidifier (2f) is disposed in the indoor field (A) in a plug-in manner, and the networking cloud computing server (3) issues the control instruction via IoT communication to the gas detector (1) inside the dehumidifier (2f) for controlling the at least one driving controller (23) to enable the at least one gas guider (21), so that the air pollution in the indoor field (A) is guided to pass through the at least one filter element (22) for filtration and purification, thereby achieving the purification procedure for reaching cleanroom class with a level of air pollution close to zero, and adjusting temperature and humidity of a gas in the indoor field (A), wherein the dehumidifier (2f) is set to have a safety value of temperature at 25°C±3°C, and a safety value of humidity at 50%±10%; and wherein the vacuum cleaner (2g) is a mobile vacuum cleaner, the vacuum cleaner (2g) is disposed in the indoor field (A) in a plug-in manner, and the networking cloud computing server (3) issues the control instruction via IoT communication to the gas detector (1) inside the vacuum cleaner (2g) for controlling the at least one driving controller (23) to enable the at least one gas guider (21), so that the air pollution in the indoor field (A) is guided to pass through the at least one filter element (22) for filtration and purification, thereby achieving the purification procedure for reaching cleanroom class with a level of air pollution close to zero.

9. The indoor air cleaning system with networking mechanism as claimed in claim 1, wherein the air conditioning device (2h) is disposed in the indoor field (A) and comprises a heat exchanger (26); wherein the networking cloud computing server (3) issues the control instruction via IoT communication to the gas detector (1) inside the air conditioning device (2h) for controlling the at least one driving controller (23) to enable the at least one gas guider (21), so that the air pollution in the indoor field (A) is guided to pass through the at least one filter element (22) for filtration and purification so as to achieve the purification procedure for reaching cleanroom class with a level of air pollution close to zero, a gas in the indoor field (A) is guided to pass through the heat exchanger (26) for adjusting a temperature and a humidity of the gas in the indoor field (A), and the gas detector (1) outputs the temperature and humidity information of gas of the indoor field (A); and wherein the heat exchanger (26) is set to adjust the temperature of the indoor field (A) at 25°C±3°C and the humidity of the indoor field (A) at 50%±10%.

10. The indoor air cleaning system with networking mechanism as claimed in claim 1, wherein the IoT communication is a wired communication for the networking cloud computing server (3) to communicate in a wired manner, or a wireless communication for the networking cloud computing server (3) to communicate wirelessly, wherein the wireless communication is one selected from the group consisting of a Wi-Fi communication, a Bluetooth communication, a radio frequency identification communication and a near field communication, and wherein the gas detector (1) comprises a controlling circuit board (11), a gas detection main part (12), a microprocessor (13) and a communicator (14), wherein the controlling circuit board (11) is electrically connected to the at least one driving controller (23), the gas detection main part (12), the microprocessor (13) and the communicator (14) are integrally packaged on the controlling circuit board (11) and electrically connected to the controlling circuit board (11), the microprocessor (13) controls a detection operation of the gas detection main part (12) for detecting the air pollution, and the microprocessor (13) processes and provides the air pollution information to the communicator (14) for external communication transmission.

11. The indoor air cleaning system with networking mechanism as claimed in claim 1, wherein the at least one filter element (22) is a MERV (Minimum Efficiency Reporting Value) 8 filter screen or above or a high efficiency particulate air (HEPA) filter screen, and the HEPA filter screen is a HEPA 10 filter screen or above with a dust containing capacity larger than 12000 mg.

12. The indoor air cleaning system with networking mechanism as claimed in claim 1, wherein the at least one filter element (22) is combined with a decomposition layer through coating for sterilizing in chemical means by passing therethrough the air pollution, wherein the decomposition layer comprises an activated carbon (22a) having an absorptive capacity of formaldehyde larger than 1500 mg, or comprises one selected from the group consisting of a cleansing factor containing chlorine dioxide layer (22b), an herbal protective layer (22c) extracted from ginkgo and Japanese Rhus chinensis, a silver ion (22d) and a zeolite (22e).

13. The indoor air cleaning system with networking mechanism as claimed in claim 1, wherein the at least one filter element (22) is combined with a light irradiation element to sterilize in chemical means by passing therethrough the air pollution, and the light irradiation element is a photo-catalyst unit including a photo catalyst (22f) and an ultraviolet lamp (22g), or a photo-plasma unit including a nanometer irradiation tube (22h), wherein a power of the ultraviolet lamp (22g) is larger than 120 mW; or wherein the at least one filter element (22) is combined with a decomposition unit to sterilize in chemical means by passing therethrough the air pollution, and the decomposition unit is a negative ion unit (22i) or a plasma ion unit (22j); and wherein the networking cloud computing server (3) comprises a wireless network cloud computing service module (31), a cloud control service unit (32), a device management unit (33) and an application program unit (34), and a cleanroom class is represented by a cleanness of ZAPClean room 1~12.

14. The indoor air cleaning system with networking mechanism as claimed in claim 13, wherein a required equivalent of clean air delivery rate (CADR) per cubic meter for ZAPClean room 1 to ZAPClean room 12 is one selected from the group consisting of 195000~370000 m³/h, 58000~115000 m³/h, 17500~35000 m³/h, 5200~10000 m³/h, 1500~3000 m³/h, 450~1000 m³/h, 135~300 m³/h, 60~135 m³/h, 35~80 m³/h, 15~40 m³/h, 10~30 m³/h and 3~10 m³/h.

15. The indoor air cleaning system with networking mechanism as claimed in claim 1, wherein after a required equivalent of clean air delivery rate (CADR) of the indoor field (A) is computed and confirmed by the networking cloud computing server (3), an arranged number of the at least one gas molecule controlling hardware apparatus (2) and an optimal CADR of the gas guider (21) are decided based on the required equivalent, thereby achieving an optimal cost effectiveness for the purification procedure for reaching cleanroom class with a level of air pollution close to zero.
